Europäisches Patentamt

European Patent Office

Office européen des brevets

(19)

(11) Publication number: 0 040 526
A2

(12) **EUROPEAN PATENT APPLICATION**

(21) Application number: 81302174.8

(22) Date of filing: 15.05.81

(51) Int. Cl.³: **F 23 L 15/04**
F 23 D 13/42, F 28 D 9/02

(30) Priority: 16.05.80 GB 8016334

(43) Date of publication of application:
25.11.81 Bulletin 81/47

(84) Designated Contracting States:
AT BE CH DE FR GB IT LI LU NL SE

(71) Applicant: Ward, Trevor
Cliff Cottage
Earlsheaton Dewsbury West Yorkhire(GB)

(72) Inventor: Ward, Trevor
Cliff Cottage
Earlsheaton Dewsbury West Yorkhire(GB)

(74) Representative: Everitt, Christopher James
Wilders et al,
F.J. CLEVELAND & COMPANY 40/43 Chancery Lane
London WC2A 1JQ(GB)

(54) Self recuperative burners.

(57) A self-recuperative burner 10 in which the incoming combustion air is preheated by heat exchange with products of combustion in a cross-flow ceramic plate heat exchange unit 18 which is mounted as an integral part of the burner 10 in refractory material structure which forms the combustion zone as well as carrying a fuel feed lance 39 leading to the combustion zone, the refractory material structure also forming an air supply passage 36 connecting the air passages of the heat exchange unit 18 to the combustion zone and a combustion products exhaust flow passage 33 leading from the furnace interior to the exhaust passages of the heat exchange unit 18. The combustion air is conveyed past the exhaust flow twice in the heat exchange unit 18.

FIG.1

EP 0 040 526 A2

- 1 -

"Self Recuperative Burners"

This invention relates to self-recuperative burners, that is to say to burners which include an integral heat exchange section in which combustion air is preheated by heat exchange with hot combustion products which are exhausted through the burner.

The design of self-recuperative burners is discussed in a paper presented to the 35th Autumn Research Meeting of The Institution of Gas Engineers in November 1969 by W.P. Harrison, B. Oeppen and S. Sourbutts, and published as Gas Council Research Communication GC 164 "The Design of Self-Recuperative Burner". This paper states that self-recuperative burners had, in recent years prior to 1969, been successfully applied to many industrial processes as an alternative to the usual methods of preheating combustion air which were either by means of a regenerative system or by using a heat exchanger which was external to the furnace. Regenerative systems tend to be large and the air preheats may vary continuously. There are several disadvantages of external recuperators or heat exchangers. Combustion products may have to be ducted to the recuperator from the furnace with resulting heat loss. Hot-air ducts and manifolds are necessary, and any burner adjustments are made on the hot side of the recuperator. There are pressure losses to be overcome in the ducts to and from the heat exchanger. The paper continues to describe a typical self-recuperative burner in which the combustion air supply passage and the exhaust passage are concentric annular passages formed around the fuel passage by an assembly of coaxial tubes. This arrangement locates the hottest part of the recuperator or heat exchanger within or adjacent to the furnace wall. It is stated that there is a fuel saving to be made by using self-recuperative burners at high temperatures and with this in mind a self-recuperative burner fitted with ceramic air tubes was tested. The paper also describes tests made on various different constructions of self-recuperative burner in search of the optimum burner design but the various changes were to the length and/or diameter of the tubes, no change being made to the basic form of annular combustion products exhaust passage which shares a common wall with an axially extending combustion air tube.

British Patent Specifications Nos. 944372; 1140449; 1314025 and 1332125, French Specification No. 2378236 and U.S. Specifications Nos. 3163202; 3420614 and 3468616 show other forms of self-recuperative burners and they all comprise an annular combustion products exhaust passage through the burner which shares a common wall with an axially extending combustion air tube which extends to a location adjacent the burner head such that the hottest part of the integral heat exchange section of the burner is at or adjacent to the furnace wall. Although in several of these burner designs the combustion products exhaust passage is formed in refractory material structure (see British Patent Specification No. 944372 for example), the tubes that convey combustion air to the combustion zone are metal tubes in each case.

The metal tubes of conventional self-recuperative burners which form the common wall between the combustion air supply passage and the annular exhaust passage through which the hot gaseous products of combustion are conveyed away from the furnace enclosure are liable to corrode to such an extent that the useful life of such a self-recuperative burner has been too short for such burners to be an economically viable proposition for certain applications such as for heating furnaces in which glass is produced. The use of tubes of a refractory material instead of these metal tubes, which has been proposed, has not lead to burners that have proved satisfactory for such applications because it has not been possible to provide such tubes which are structurally sound and allow the desired heat transfer from the combustion products to the incoming combustion air.

To overcome this problem in carrying out this invention I have departed from the standard practice of arranging for the combustion air supply passage to be formed as an axially-extending tube which shares a common heat exchange wall with an annular exhaust passage, that common wall extending to a location adjacent the burner head, and I have evolved a new and unconventional arrangement of self-recuperative burner in which the incoming combustion air is preheated by heat exchange with products of combustion in a cross-flow ceramic plate laminate heat exchange unit which is mounted as an integral part of the burner in refractory material structure of the burner at a location spaced from the end portion of the burner that is inserted in the furnace wall, the exhaust products being conveyed to the respective passage system of the heat exchange unit through a non-annular exhaust passage formed in the refractory material structure of the burner and the preheated combustion air being led from the respective passage system of the heat exchange unit to the combustion zone of the burner by another passage formed in the refractory material structure of the burner.

According to this invention there is provided a self-recuperative burner comprising a refractory material structure comprising one end portion and a remaining portion, said one end portion being adapted to be fitted into an aperture in a wall of an enclosure so that the remaining portion projects outwards from that enclosure, there being a combustion zone, a combustion air supply passage, an outlet port and an exhaust passage formed in the refractory material structure, the combustion air supply passage leading to said zone, the outlet port which is formed in said one end portion, placing the combustion zone in communication with the
interior of the enclosure whereby hot gases produced by
the combustion of air and fuel fed to said zone are
directed into the enclosure through said outlet port
and the exhaust passage being for conveying away from
the interior of the enclosure products of combustion of
fuel and air fed to said zone; fuel supply means which
extend through said structure to said zone and are
adapted to supply fuel to said zone; and means whereby
incoming combustion air fed to said zone is preheated
heat exchange with products of combustion flowing
through said exhaust passage; wherein said exhaust passage is non-annular throughout and said means whereby
products of combustion conveyed through it are brought
into heat exchange with incoming combustion air to preheat the latter comprise a heat exchange unit mounted
in said remaining refractory material structure portion
as an integral part of the burner at a location spaced
from said end portion, the heat exchange unit comprising a structural unit of refractory material comprising
a laminate of plates of refractory material and means
forming passages which extend through the unit from end
to end between juxtaposed plates of the unit, the passages formed between alternate ones of the pairs of
juxtaposed plates extending in one direction and collectively comprising one passage system which communicates with said combustion air supply passage and the
remaining passages extending transverse to said one
direction and collectively comprising another juxtaposed passage system which communicates with said
exhaust passage.

Such a structural heat exchange unit can be
arranged so that the walls that separate the juxtaposed
passage system through the unit are thinner than the
wall formed by a tube of refractory material which
forms part of a heat exchange unit which is of a concentric tubular construction. Also the overall heat
exchange area can be larger.

I have found that, by appropriate selection
of the dimensions of the structural unit, especially
the length and cross-section of the passages through it
with the consequential influence upon the pressure drop
across the unit, as well as the thickness of the material, an effective amount of preheating of air fed to
the combustion zone by heat exchange with the hot products of combustion conveyed through the unit can be
obtained.

Preferably the unit is provided with communicating means whereby a first group of the passages of a
first of said juxtaposed passage systems are placed at
their downstream ends in communication with a second
group of the passages of said first juxtaposed passage system at their adjacent ends which are thus their upstream ends whereby the fluid stream that is conveyed through said first juxtaposed passage system passes and re-passes the fluid stream that is conveyed through the second of the two juxtaposed passage systems. There may be further communicating means whereby the downstream ends of the second group of passages are placed in communication with a third or more groups of the passages of said first juxtaposed passage system so that the fluid stream conveyed through the first juxtaposed passage system passes the fluid stream conveyed through the second juxtaposed passage system at least three times within the unit. Preferably said first juxtaposed passage system is said one juxtaposed passage system and the cross-sectional area of each of its passages may be approximately half the cross-sectional area of each of the passages of said other juxtaposed passage system. The or each communicating means may comprise a recessed plate fitted at the respective end of the unit, the respective groups of passages being placed in communication via a respective recess in the plate. Preferably the first group of passages of said one juxtaposed passage system pass the passages of said other juxtaposed passage system downstream in the context of the direction of flow of the combustion products conveyed through said second juxtaposed passage system, of the location at which the second group of passages pass·said other juxtaposed passage system and in the same context, where there are three or more groups of passages in said one juxtaposed passage system, the second group is downstream of the third group and so on, the last group being the most upstream so that the coolest incoming air is brought into heat exchange with the coolest flow of combustion products and the hottest incoming air is brought into heat exchange with the hottest flow of combustion products.

The structural unit may be mounted removably within the casing so that it can be removed and replaced by another structural unit. The means for mounting the unit in the casing, which is preferably a metal clad refractory material casing, may include resilient means whereby differential thermal expansion can occur. Desirably sealing means are provided between the structural unit and the remainder of the burner whereby an effective fluid tight seal is provided to seal against leakage into and out of the exhaust passage at the interfaces between the unit and the remainder of the burner.

Conveniently the passages of the other juxtaposed passage system extend upwards from the exhaust passage formed in the remaining refractory material structure portion. The heat exchange unit may be one of a stack of similar heat exchange units mounted one on top of the other, means being provided for placing their upwardly extending passages in communication and means being provided for placing the downstream ends of the passages of said one juxtaposed passage system of the upper unit in communication with the upstream ends of the corresponding passages of the unit on which that upper unit is stacked.

Three forms of self-recuperative burner in which this invention is embodied will be described now with reference to the accompanying drawings, of which:-

Figure 1 is a sectioned diagram illustrating installation of one form of burner in a furnace wall;

Figure 2 is an exploded isometric view of the heat exchanger unit incorporated in the burner shown in Figure 1;

Figure 3 is a longitudinal section of one practical form of burner in which this invention is embodied, the section being on the line III-III in Figure 4;

Figure 4 is a cross-section of the burner shown in Figure 3 on the line IV-IV in Figure 3;

Figure 5 is a sectioned plan on the line V-V in Figure 3;

Figure 6 is a side elevation of another practical form of burner in which this invention is embodied;

Figure 7 is an end elevation of the burner shown in Figure 6;

Figure 8 is a sectioned plan on the line VIII -VIII in Figure 6;

Figure 9 is a fragmentary section on the line IX-IX in Figure 6; and,

Figure 10 is a section on the line X-X in Figure 9.

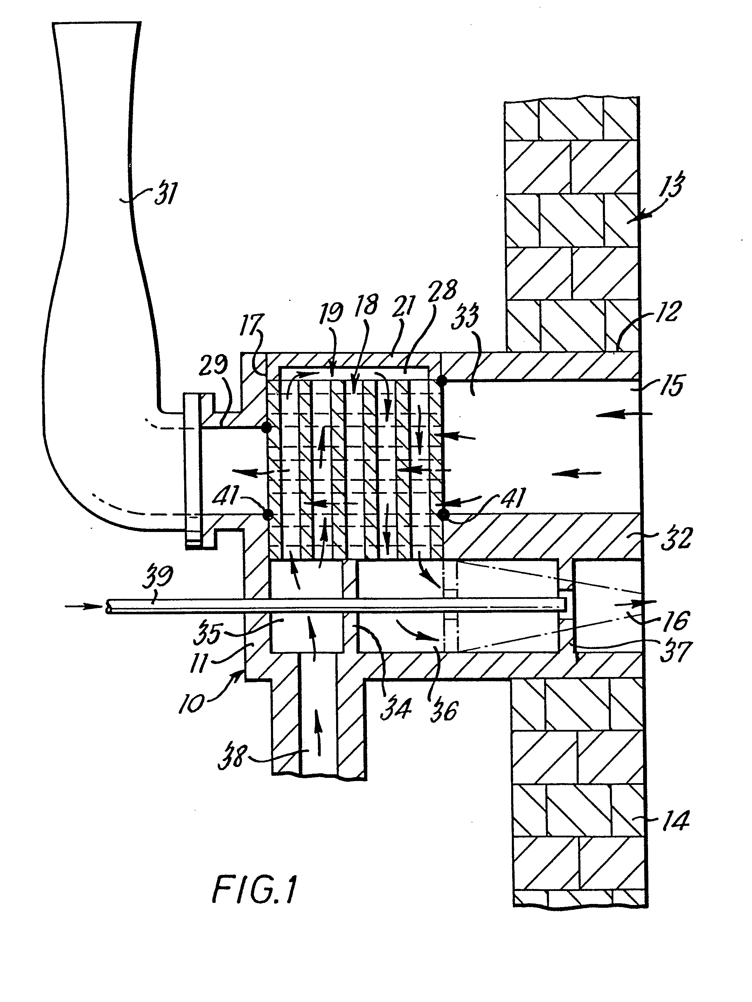

Figure 1 shows a burner 10 which comprises a hollow casing 11. One end portion of the casing 11 is fitted at one end into an aperture 12 in a vertical wall 13 of a furnace so that the remaining portion of the casing 11 projects outwards from the furnace. The casing 11 comprises a double walled skin and internal barriers. The inner wall of the skin and the internal barriers are a refractory material structure and the outer wall of the skin is a metal cladding. The furnace is a walled enclosure which is formed of bricks 14 of a refractory material. Two ports 15 and 16 by which the interior of the casing and the interior of the furnace communicate with one another, are formed one above the other in the end of the casing 11 that is fitted into the aperture 12.

A hole 17 is formed in the top of the casing 11 at a location which is spaced from the wall 13. A heat exchange unit 18, which is formed of refractory material, is mounted within the casing 11 with its top located in the hole 17. The mounting arrangement for the heat exchange unit 18 conveniently includes resilient means, such as springs, which allow for relative thermal expansion of the casing 11 and the unit 18. The heat exchange unit 18 can be removed from the casing 11 by being lifted through the hole 17 and hence can be replaced by a similar unit 18 if necessary.

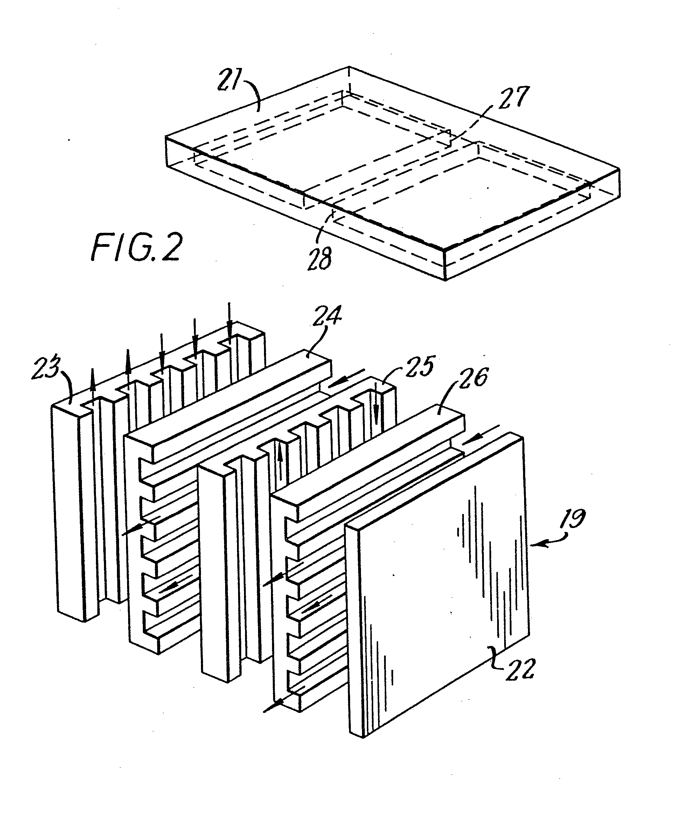

The detailed construction of a preferred form of heat exchanger for use as the unit 18 will be described now with reference to Figure 2 which illustrates a simple version of that form of heat exchanger.

The heat exchanger comprises an apertured block 19, which is formed as a laminate of plates of refractory material, and a cap 21. The plates that make up the block 19 comprise an end plate 22, which is a plain plate, and a number (say four as shown in Figure 2) of grooved plates 23-26. Each grooved plate 23-26 has a plane surface on one side and a number of parallel grooves formed in its other side, the grooves extending from edge to edge. The plates 23-26 are arranged in the laminate so that the grooved face of each plate 23-26 abuts the plane face of the juxtaposed plate 22-26. Also the grooves in each juxtaposed pair of the grooved plates 23-26 are mutually perpendicular. Hence the block 19 has two rows of vertical through passages and two rows of horizontal through passages formed in it, the two rows of vertical through passages being separated by one of the rows of horizontal through passages which in turn is separated from the other row of horizontal through passages by one of the rows of vertical through passages.

The cap 21 is fitted on the top of the block 19. It has recesses formed in its lower surface, there being one such recess for each row of vertical through passages. Hence two such recesses 27 and 28 are shown in Figure 2. Each recess 27, 28 communicates with the passages of the respective row of vertical through passages so that the groups of passages of the respective row between the centre and one of the apertured side faces of the block 19 is placed in communication with

- 14 -

the remaining vertical passages of that row.

The heat exchange unit 18 is orientated within the casing 11 such that the two apertured side faces of the block 17 are the side faces that are respectively nearest to and furthest from the port 15. The side face of the block 17 that is furthest from the port 15 abuts the end of the casing 11 and the horizontal through passages communicate with an exhaust port 29 which is formed in the casing 11 and which is connected to an exhaust flue 31.

A horizontal barrier 32 extends from the bottom of the heat exchange unit 18 to the casing portion that separates the ports 15 and 16. The barrier 32 separates the portion 33 of the interior of the casing 11 above it from the remainder of the interior of the casing 11. A vertical barrier 34 below the centre of the unit 18 extends across the full width of the interior of the casing 11 and separates an air inlet chamber 35 from another chamber 36 which is formed by that part of the interior of the casing 11 that extends below the horizontal barrier 32 and below the half of the unit 18 that is adjacent the horizontal barrier 32. The air inlet chamber 35 is in communication with the lower ends of said group of passages of each row of vertical through passages whilst the lower ends of the remaining vertical through passages are in communication with the chamber 36 which forms a combustion air passage which leads from the heat exchange unit 18 to the combustion zone of the burner 10. An apertured barrier 37 is located within the chamber 36 and extends across it substantially between the heat exchange unit 18 and the end of the horizontal barrier 32 that is remote from the heat exchange unit 18. An air inlet port 38, which is formed in the casing 11 communicates with the air inlet chamber 35.

A fuel feed lance 39 is a fluid tight fit in holes in the vertical barrier 34 and the outer end wall of the casing 11 through which it extends. The end of the lance 39 within the casing 11 is adjacent the aperture formed at the centre of the apertured barrier 37 and the other end of the lance 39 is adapted for connection to a suitable source of fuel oil or fuel gas.

Seals 41 are provided at each junction between the heat exchange unit 18 and the casing 11, including the horizontal barrier 32. The seals 41, which conveniently comprise stack bonded ceramic fibre seals, provide an effective fluid tight seal against leakage into and out of the exhaust port 29 and the casing interior portion 33 at the interface between the unit 18 and the casing 11.

The combustion zone of the burner 10 extends from the aperture in the barrier 37 to the adjacent

- 16 -

outlet port 16. The exhaust passage for the conveyance of products of combustion from within the furnace through the burner 10 to the flue 31 comprises the casing interior portion 33, the passages through the heat exchange unit 18 that communicate therewith and are formed by the grooves of the plates 24 and 26, and the exhaust port 29.

In operation of the burner 10, fuel is supplied through the fuel feed lance to the combustion zone of the burner 10. Fresh, cool air is introduced into the air inlet chamber 35 through the air inlet port 38. That fresh air is passed up through the vertical through passages of the apertured block 19 that communicate with the air inlet chamber 35, into the respective recess 27, 28 from where it is returned through the remaining vertical through passages to the chamber 36. That air flow into the chamber 36 passes through the aperture in the apertured barrier 37 and supports combustion in the combustion zone of the fuel fed to that zone by the lance 39, such fuel being atomised within that air flow as it emerges from the lance 39. The apertured barrier 37 serves to cause distribution of the air into the combustion zone and as means for stabilising the flame.

The flame and stream of hot gaseous products of combustion are directed through the port 16 into the furnace where they circulate and then leave the furnace via the port 15 for conveyance through the exhaust passage of the burner 10.

Means may be provided for causing the combustion products to enter the burner 10 from the furnace in a direction other than directly opposite to the direction in which they entered the furnace from the burner 10. Such means are described and claimed in British Patent Publication No. 2004994A and German OLS 28 38 259.

The hot combustion products conveyed through the exhaust passage of the burner are first cooled by heat exchange with the incoming air flow that is flowing from the recesses 27 and 28 to the chamber 36 and which has already been heated by heat exchange with the cooler downstream flow of combustion products as it flows to the recesses 27 and 28 from the air inlet chamber 35.

The exhaust flue 31 may be provided with an eductor which is operable to draw combustion products through the exhaust passage of the burner 10. Alternatively, for burners which operate with low internal pressures, a damper may be provided instead of the eductor.

The heat exchange unit 18 may be fixed irremovably within the casing for certain applications.

The heat exchange unit may be formed of a laminate comprising any suitable number of plates so that the incoming air flow may be led passed the outgoing flow of hot combustion products three or more times en route to the combustion zone.

The cross-sectional area of each of the rows of the horizontal through passages that are formed by the grooves in the grooved plates 24 and 26 may be approximately twice the cross-sectional area of each of the vertical through passages that are formed by the grooves in the grooved plates 23 and 25.

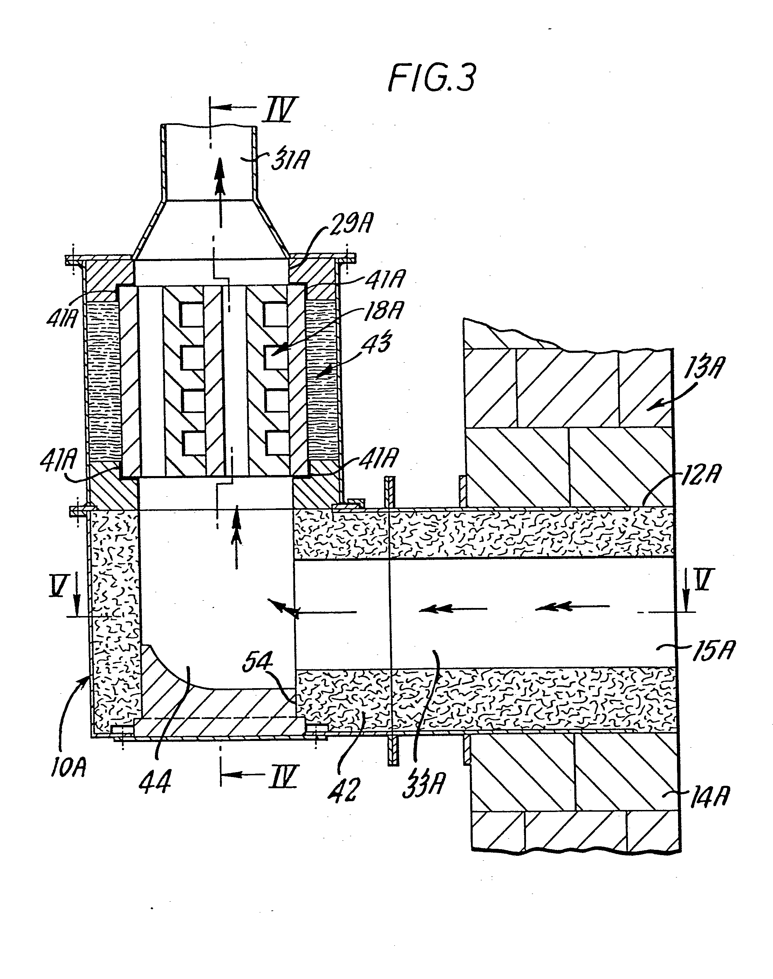

Figures 3 to 5 show a practical form of burner 10A in which this invention is embodied. Parts of the burner 10A which correspond to parts of the burner 10 described above with reference to Figures 1 and 2 are identified by the reference numerals used to identify the corresponding parts of the burner 10 followed by the character "A".

The casing 11A comprises a rectangular quarl 42 of refractory material, which is fitted at one end into the aperture 12A in the furnace wall 13A so that it projects outwards from the furnace, and a heat exchange section 43 which is supported upon the other end of the quarl 42. The heat exchange unit 18A is housed within structure of refractory material which forms part of the heat exchange section 43. The outer surfaces of refractory material parts of the casing 11A are clad with sheet metal.

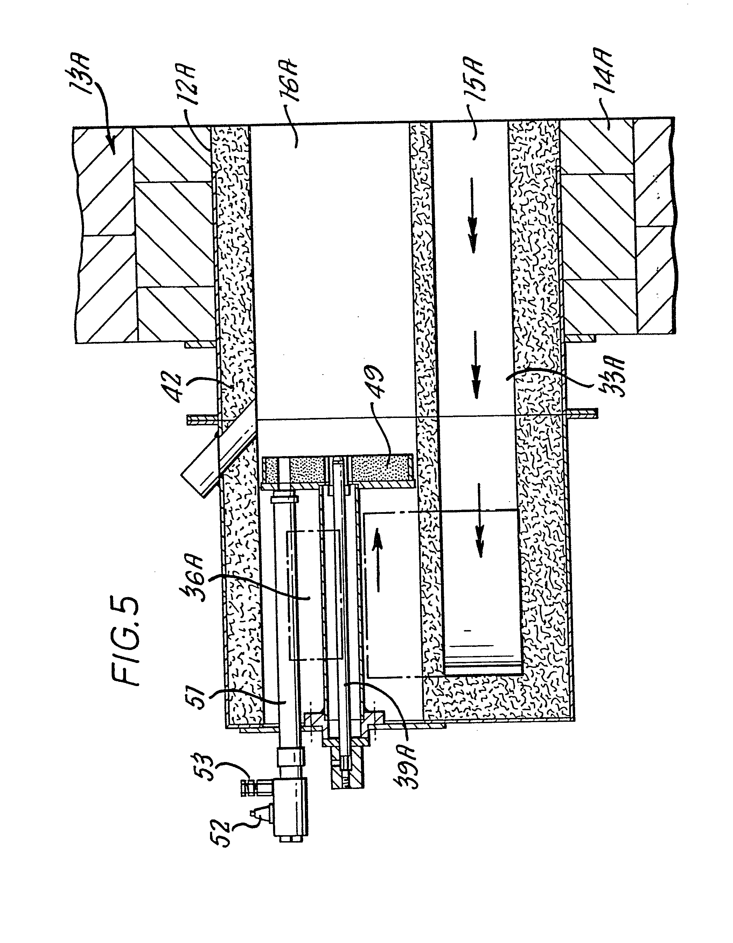

As is best shown in Figure 5, that part 33A of the exhaust passage that connects the port 15A to the respective passages through the heat exchange unit 18A runs through the quarl 42 alongside the combustion zone rather than above it as in the burner 10. A bend 44 is formed in the exhaust passage below the heat exchange unit 18A so that the exhaust passage is turned upwards to communicate with the vertical passages through the heat exchange unit 18A as can be seen from Figure 3. The exhaust port 29A is formed in the casing 11A above the heat exchange unit 18A and the exhaust flue 31A, which includes an eductor, extends upwards from the exhaust port 29A.

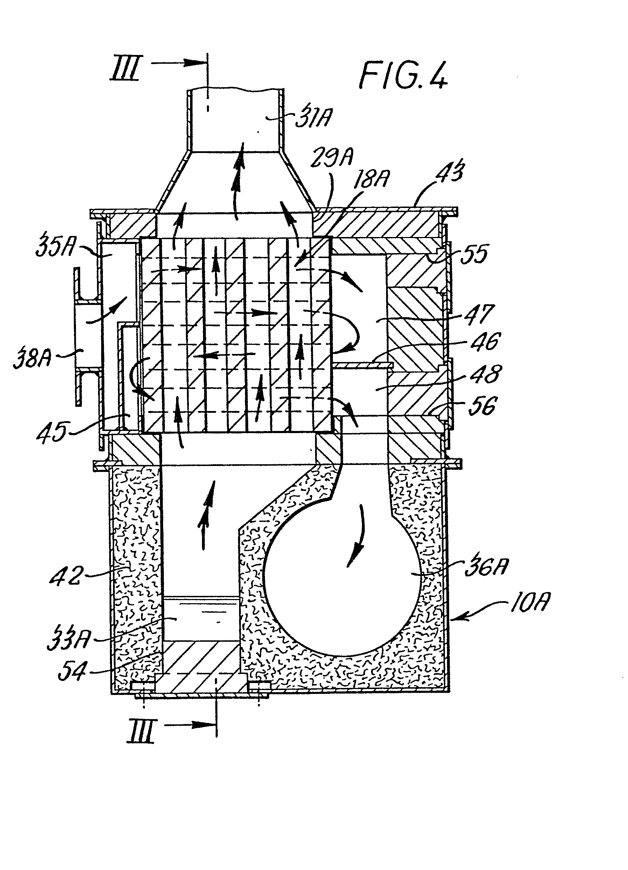

The orientation, configuration and construction of the heat exchanger unit 18A will be understood from the foregoing description but it should be appreciated that it doesn't include the recessed plate 27 and that the horizontal passages through it are arranged in three groups so that the flow path for air from the air inlet port 38A to the chamber 36A through the heat exchange unit 18A, which is indicated in Figure 4 by single headed arrows, passes the flow path for exhaust gases through the vertical passages in the unit 18A, which is indicated by double-headed arrows in Figure 4, three times.

The air inlet port 38A is formed by sheet metal structure which also forms the air inlet chamber 35A and a connecting chamber 45 by which the downstream ends of the second, or middle group of horizontal passages through the unit 18A are placed in communication with the upstream ends of the third, or lowermost group of horizontal passages through the unit 18A.

The ends of the horizontal passages through the heat exchange unit 18A that are remote from the chambers 35A and 45 communicate with a space that is formed between the unit 18A and the refractory material structure of the heat exchange section 43. A baffle plate 46, which has one edge embedded in the refractory material structure, divides the space into an upper chamber 44 and a lower, smaller chamber 48. The downstream ends of the uppermost, or first group of horizontal passages through the unit 18A communicate with the upstream ends of the second or middle group of horizontal passages through that unit 18A via the upper chamber 47 and are isolated from the downstream ends of the third or lowermost group of horizontal passages by the baffle plate 46. The lower chamber 48 communicates with the chamber 36A.

The main liquid fuel feed lance 39A extends through the chamber 36A to a burner head 49. The lance 39A comprises a central liquid fuel feed tube which is surrounded by an air tube which in turn is shrouded by a tubular shield. Hence liquid fuel that is conveyed to the burner head 49 has heat conveyed from it by the surrounding air flow and is shielded from direct contact with the heated combustion air in the chamber 36A as is described in Belgium Patent No. 863145, German OLS 28 02 640, French A 2378236, Swedish Patent Application No. 7800715.0, Netherlands Patent Application No. 7800615 and U.K. Patent Application No. 2445/77. A secondary fuel feed lance 51 is provided for forming a pilot flame. The secondary lance 51 is fitted with a spark plug 52, a shut off valve 53 and a connection for connection to a supply of air/fuel mixture; and extends to the burner head 49 where the pilot flame is formed.

The quarl 42 has an aperture 54 formed in the region of the bend 44 whereby the bend 44 communicates with the outer surface of the quarl 42. The aperture 54 is shown plugged in Figure 4 and may be unplugged in certain installations so as to be placed in communication with a location in the furnace that is remote from the combustion zone outlet port 16A.

Two further plugged apertures 55 and 56 are formed in the refractory material structure of the heat exchange section 43. One, 55, of the apertures communicates with the upper, larger chamber 47 when unplugged. The other aperture 56 communicates with the lower smaller chamber 48 when unplugged. The plugged apertures 55 and 56 are provided to enable, when unplugged,

- 22 -

hot gases to be introduced into the horizontal passages through the unit 18A so that deposits formed on the walls of the vertical passages can be removed by being melted.

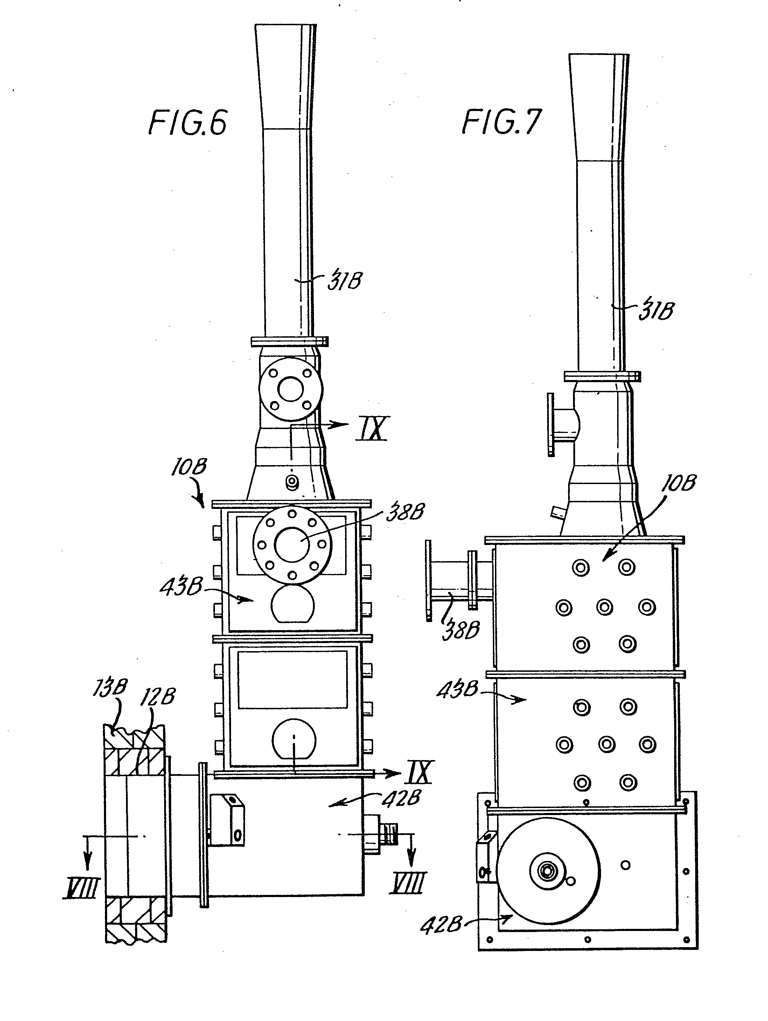

Figures 6 to 10 show in greater constructional detail another practical form of burner 10B in which this invention is embodied. Parts of the burner 10B which correspond to parts of the burner 10 or of the burner 10A described above with reference to Figures 1 to 2 or Figures 3 to 5 respectively are identified by the reference numerals used to identify the corresponding parts of the burner 10 or of the burner 10A but followed by the character "B".

Figures 6 and 7 show the burner 10B comprises a main structure of refractory material 42B, which is for fitting at one end into an aperture 12B in a furnace wall 13B so that it projects outwards from the furnace, and which supports a heat exchange section 43B.

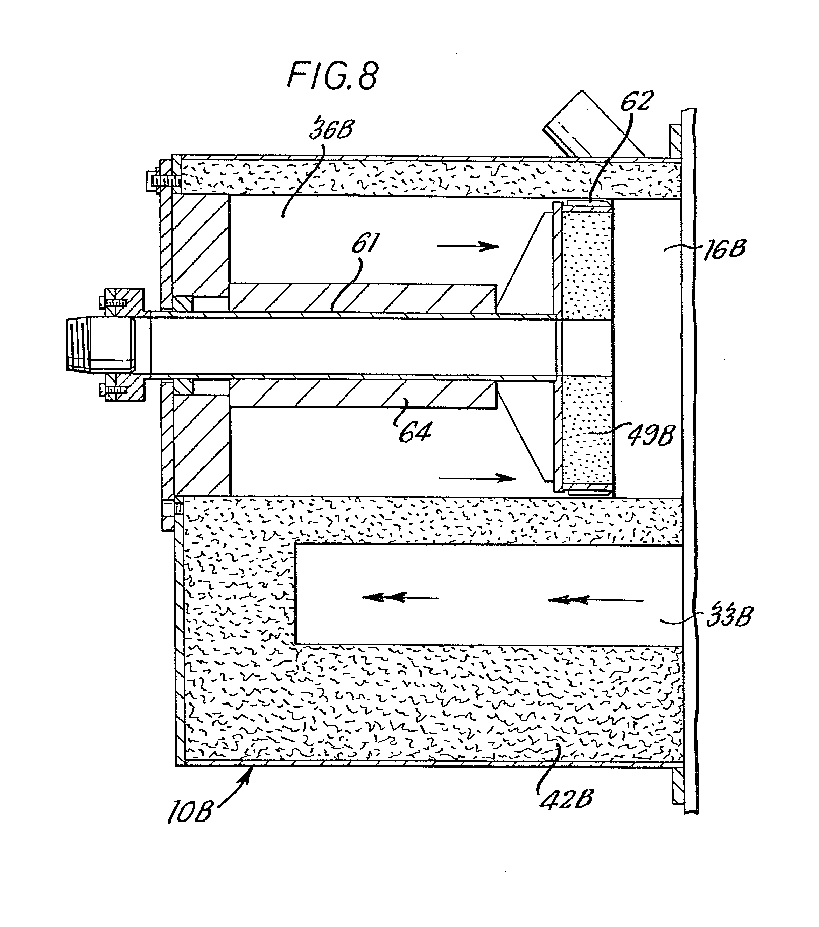

Figure 8 shows that the main refractory material structure 42B is generally similar to the rectangular quarl 42 of the burner 10A. That part 33B of the exhaust passage that leads through the structure 42B to the heat exchange section 43B is similar to the corresponding part 33A of the burner 10A. A chamber 36B, similar to the chamber 36A, is also formed in the structure 42B and is divided by a burner head 49B into a combustion air inlet passage and a combustion zone
which extends from the burner head 49B to the outlet'
port 16B.

The burner head 49B is mounted at the end of
a gaseous fuel supply tube 61 and is formed from a
metal-clad disc of refractory material which has a circumferentially spaced array of spacers 62 around its
periphery by which it is a sliding fit in the wall of
the chamber 36B. The burner head 49B is apertured.
Hence combustion air flows passed the burner head 49B
to the combustion zone through the apertures formed in
the burner head 49B and through the arcuate gaps formed
between the circumferentially spaced spacers 62, the
wall of the chamber 36B and the periphery of the burner
head 49B. Fuel gas is fed to the combustion zone via
the gas supply tube 61 and a central aperture in the
burner head 49B. The portion of the gas supply tube 61
leading through the chamber 36B to the burner head 49B
is encased in a tubular insulator 64 of refractory material so that the incoming fuel gas is not subjected to
the extreme heat of the incoming combustion air in the
chamber 36B.

The main difference between the burner 10B
and the burner 10A described above with reference to
Figures 3 to 5 is that the heat exchange section 43B
comprises two similar heat exchange units 18B stacked one on top of the other.

The lower heat exchange unit 18B rests upon a lower cast block 65 of refractory material. Two apertures 66 and 67 are formed in the block 65. One, 66, of those apertures is below the block 18B and the other, 67, is displaced to one side of the block 18B. The aperture 66 is upwardly divergent and provides communication between the adjacent end of the exhaust passage portion 33B that extends through the refractory material structure 42B and the upwardly extending channels formed through the lower heat exchange unit 18B. An upper cast block 68 of refractory material rests upon the lower heat exchange unit 18B. Two apertures are formed in the upper cast block 68. One, 69, of those apertures communicates with the upper ends of the upwardly extending passages through the lower heat exchange unit 18B and the other, 71, is directly above the aperture 67.

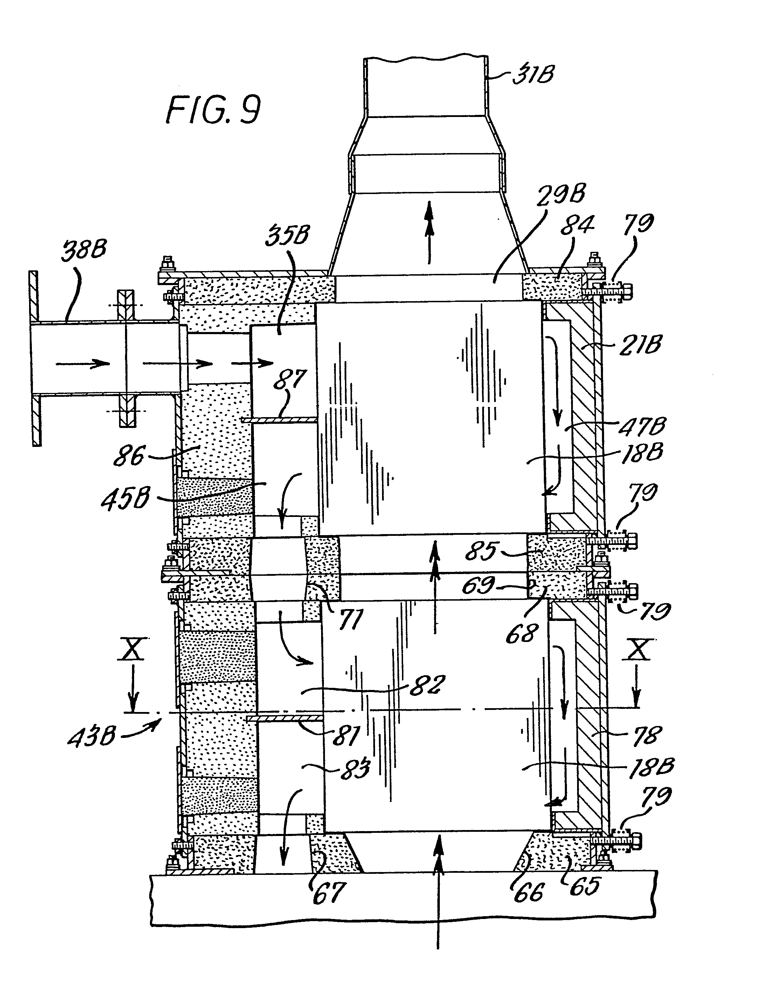

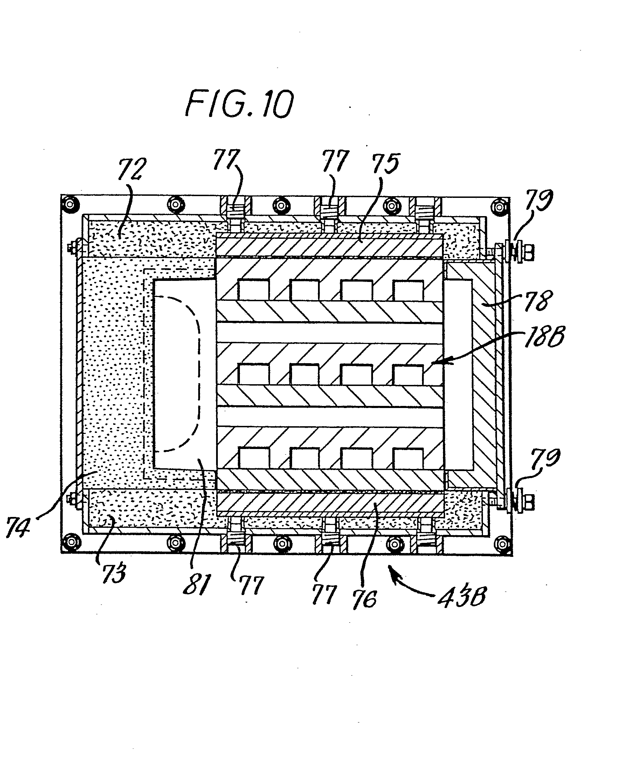

Figure 10 shows that the lower heat exchange unit 18B is surrounded on three of its sides by two side blocks 72 and 73 and an end block 74 which are cast blocks of refractory material and which extend between the lower and upper blocks 65 and 68 as will be apparent from Figure 9. Each side block 72, 73 is recessed and its recess accommodates a respective pressure plate 75, 76 which is urged against the lower unit 18B by compression springs which react against respective screw plugs 77 fitted in the respective cast side block 72, 73. A recessed pressure block 78 is located between the lower and upper blocks 65 and 68 on the fourth side of the lower heat exchange unit 18B and is urged resiliently by coil spring arrangements 79 shown in Figures 9 and 10 against the unit 18B to locate the latter against the opposite end block 74. The pressure block recess is adjacent the lower unit 18B and the opposed face of the end block 74 is recessed similarly. The refractory end block 74 carries a baffle plate 81 which divides the recess formed between the end block 74 and the lower unit 18B into upper and lower compartments 82 and 83 respectively. The lower compartment 83 communicates with the aperture 67 and the upper compartment 82 communicates with the aperture 71 through corresponding apertures in intervening portions of the cast end block 74. The cast end block 74 is formed with two plugged apertures one of which would communicate with the upper compartment 82 when unplugged and the other of which would communicate with the lower compartment 83 when unplugged. The recess formed by the pressure block 78 communicates with the adjacent ends of all the laterally extending passages formed through the lower heat exchange unit 18B.

The upper heat exchange unit 18B is similarly located between upper and lower cast blocks 84 and 85, each having apertures in vertical alignment with the' aperture 69. The lower cast block 85 also has an aperture in vertical alignment with the aperture 71 of the upper cast block 68. Like the lower unit 18B, the upper heat exchange unit 18B has cast blocks along its sides and at one end, as well as pressure plates at its sides and a spring loaded pressure block 21B at its other end, the cast end block 86 and the pressure block 21B being shown in Figure 9. The arrangements of these cast side and end blocks, pressure plates and pressure block 21B are to be understood to be similar to those of the blocks that surround the lower heat exchange unit 18B.

The cast end block 79 carries a baffle plate 87 which separates the air inlet chamber 35B from a lower connecting chamber 45B which in turn communicates with the upper compartment 82 via apertures, including the aperture 71, formed in the upper and lower cast blocks 68 and 85 and the intervening portions of the cast ends blocks 74 and 86. The recessed pressure block 21B forms a chamber 47B with which all the horizontally-extending passages through the upper unit 18B communicates.

The cast blocks 65, 68, 72, 73, 74, 84, 85 and 86 and the side blocks (not shown), and the pressure blocks 21B and 78 are metal clad. The individual metal claddings are joined to one another and to a cladding on the structure 42B and provide a reaction' foundation for the spring arrangements 79.

The cladding of the cast end block 86 carries a combustion air inlet tube 38B which communicates with the air inlet chamber 35B via a suitable aperture in the block 86. There is also in the cast end block 86 a plugged aperture which would communicate with the connecting chamber 45B if unplugged. The upper cast block 86 has an aperture with which the upper ends of the vertical passages through the upper heat exchange unit 18B communicate, that aperture forming an exhaust aperture 29B which communicates with the exhaust flue 31B which is connected to the cladding of the upper cast block 84.

Ceramic fibre sealing medium in wool or paper form is located between each heat exchange unit 18B and abutting portions of the surrounding structure in which those units are mounted.

The path of incoming combustion air is indicated in Figures 8, 9 and 10 by single headed arrows and the path of combustion products flowing from the exhaust passage 33B to the exhaust flue 31B through the two heat exchange units 18B in series is indicated by double headed arrows in Figures 8, 9 and 10. Figure 9 shows that the incoming combustion air passes the exhaust flow of hot combustion products four times during its passage to the combustion air inlet passage formed by the chamber 36B in the refractory material structure 42B.

The various spring loaded pressure plate arrangements by which the heat exchange units 18B are located within the structure of the heat exchange section 43B allow for thermal expansion or contraction.

CLAIMS

1.      A self-recuperative burner (10, 10A, 10B)
comprising a refractory material structure (11, 42,
42B) comprising one end portion and a remaining portion,
said one end portion being adapted to be fitted into an
aperture (12, 12A, 12B) in a wall (13, 13A, 13B) of an
enclosure so that the remaining portion projects outwards from that enclosure, there being a combustion
zone, a combustion air supply passage (36, 36A, 36B),
an outlet port (16, 16A, 16B) and an exhaust passage
(33, 33A, 33B) formed in the refractory material structure (11, 42, 42B), the combustion air supply passage
(36, 36A, 36B) leading to said zone, the outlet port
(16, 16A, 16B), which is formed in said one end portion,
placing the combustion zone in communication with the
interior of the enclosure whereby hot gases produced by
combustion of air and fuel fed to said zone are directed into the enclosure through said outlet port (16,
16A, 16B) and the exhaust passage (36, 36A, 36B) being
for conveyeng away from the interior of the enclosure
products of combustion of fuel and air fed to said zone;
fuel supply means (39, 39A and 51, 61) which extend
through said structure (11, 42, 42B) to said zone and
are adapted to supply fuel to said zone; and means
whereby incoming combustion air fed to said zone is preheated by heat exchange with products of combustion flowing through said exhaust passage (33, 33A, 33B); characterised in that said exhaust passage (33, 33A, 33B) is non-annular throughout and said means whereby products of combustion conveyed through it are brought into heat exchange with incoming combustion air to preheat the latter comprise a heat exchange unit (18, 18A, 18B) mounted in said remaining refractory material structure portion as an integral part of the burner (10, 10A, 10B) at a location spaced from said end portion, the heat exchange unit (18, 18A, 18B) comprising a structural unit of refractory material comprising a laminate (19) of plates (22-26) of refractory material and means forming passages which extend through the unit (18, 18A, 18B) from end to end between pairs of juxtaposed plates (23 and 24, 24 and 25, 25 and 26, 26 and 22) of the unit (18, 18A, 18B), the passages formed between alternate ones of the pairs of juxtaposed plates (22-26) extending in one direction and collectively comprising one passage system which communicates with said combustion air supply passage (36, 36A, 36B) and the remaining passages extending transverse to said one direction and collectively comprising another juxtaposed passage system which communicates with said exhaust passage.

2.        A self-recuperative burner (10, 10A, 10B)
according to Claim 1, characterised in that communicating means (27, 28, 47, 47B) are provided whereby a
first group of the passages of a first of said juxtaposed passage systems are placed at their downstream ends
in communication with a second group of the passages of
said first juxtaposed passage system at their adjacent
ends which are thus their upstream ends whereby the
fluid stream that is conveyed through said first juxtaposed passage system passes and re-passes the fluid
stream that is conveyed through the second of the two
juxtaposed passage systems.

3.        A self-recuperative burner (10A) according to
Claim 2, characterised in that it includes further communicating means (45) whereby the downstream ends of
the second group of passages are placed in communication with a third or more groups of the passages of
said first juxtaposed passage system so that the fluid
stream conveyed through the first juxtaposed passage
system passes the fluid stream conveyed through the
second juxtaposed passage system at least three times
within the unit.

4.        A self-recuperative burner (10, 10A, 10B)
according to Claim 2 or Claim 3, characterised in that said first juxtaposed passage system and the cross-sectional area of each of its passages is approximately half the cross-sectional area of each of the passages of said other juxtaposed passage system.

5.      A self-recuperative burner (10, 10B) according to any one of Claims 2 to 4, characterised in that the or each communicating means comprises a recessed plate (21, 21B) fitted at the respective end of the unit (18, 18B), the respective groups of passages being placed in communication via a respective recess (27, 28, 47B) in the plate (21, 21B).

6.      A self-recuperative burner (10, 10A, 10B) according to any one of Claims 2 to 5, characterised in that the first group of passages of said one juxtaposed passage system pass the passages of said other juxtaposed passage system downstream in the context of the direction of flow of the combustion products conveyed through said other juxtaposed passage system, of the location at which the second group of passages pass said other juxtaposed passage system.

7.      A self-recuperative burner (10A) according to Claim 6, characterised in that, where there are three or more groups of passages in said one juxtaposed pass-

age system, the second group is downstream of the third group and so on, the last group being the most upstream so that the coolest incoming air is brought into heat exchange with the coolest flow of combustion products and the hottest incoming air is brought into heat exchange with the hottest flow of combustion products.

8.      A self-recuperative burner (10, 10A, 10B) according to any one of Claims 1 to 7, characterised in that the structural unit (18, 18A, 18B) is mounted removably within said remaining refractory material structure portion so that it can be removed and replaced by another structural unit (18, 18A, 18B).

9.      A self-recuperative burner (10A, 10B) according to any one of Claims 1 to 9, characterised in that the passages of the other juxtaposed passage system extend upwards from the exhaust passage formed in said remaining refractory material structure portion.

10.      A self-recuperative burner (10B) according to Claim 9, characterised in that said heat exchange unit (18B) is one of a stack of similar heat exchange units (18B) mounted one on top of the other, means (69) being provided for placing their upwardly extending passages in communication and means (45B, 82, 83) being provided for placing the downstream ends of the passages of said one juxtaposed passage systems of the upper unit (18B) in communication with the upstream ends of the corresponding passages of the unit (18B) on which that upper unit (18B) is stacked.

FIG.1

FIG.2

FIG.3

0040526

FIG.4

FIG.5

0040526

FIG.6

FIG.7

31B

31B

IX

10B

10B

38B

43B

38B

13B   12B

43B

IX

42B

VIII

VIII

42B

# FIG.8

36B

62

61 →

16B

64

49B

33B ← ←

10B

42B

FIG.9

FIG.10